# EUROPEAN PATENT APPLICATION

(11) **EP 4 429 294 A1**
(43) Date of publication of application: **11.09.2024**
(21) Application number: 21962022.6
(22) Date of filing: 01.11.2021
(51) Int. Cl.: H04W 8/24

(54) **RANDOM ACCESS METHOD AND APPARATUS AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Gunzelmann, Rainer
(86) International application number: PCT/CN2021/127973
(87) International publication number: WO 2023/070672

(57) **Abstract**

A random access method and apparatus and a storage medium. The random access method is applied to a terminal, an comprises: sending a message A comprising a physical uplink shared channel, the message A further comprising an advance indication for indicating a terminal capability (S11); and in response to the transmission failure of the physical uplink shared channel in the message A, re-reporting the corresponding terminal capability in the advance indication (S12). When the transmission of the physical uplink shared channel in the message A fails, a network device can conveniently perform accurate scheduling on the basis of the re-reported terminal capability.

## Description

### TECHNICAL FIELD

The disclosure relates to a field of communication technologies, and more particularly, to a random access method, a random access apparatus, and a storage medium.

### BACKGROUND

In the related art, in order to support Internet of things (IoT) services, two technologies, i.e., machine type communication (MTC) and narrow band Internet of thing (NB-IoT), are proposed. These two technologies are mainly aimed at applications using a low data transfer rate and a high time delay, such as meter reading, environmental monitoring, or other scenarios. In the related art, the NB-IoT may only support a rate of hundreds of kilobytes (Kb) per second at most, while the MTC may only support a rate of several megabytes (Mb) per second at most. With continuous development of Internet of things services, such as services of video surveillance, smart home, wearable devices and industrial sensor monitoring and the like, these services generally require a rate of tens to 100 Mb per second, and have a relative strict requirement for time delay. Therefore, the MTC and NB-IoT technologies in the related art have difficulty meeting the requirements. Therefore, it is proposed that a new terminal type is designed in the 5G New Radio (NR) to cover a requirement of a middle-end IoT device. In the current 3GPP standardization, such new terminal type is called a low-capacity terminal, sometimes called a reduced-capability UE, a Redcap terminal, or an NR-lite for short. The Redcap terminal is considered to have a reduced capability relative to a common terminal.

The Redcap terminal supports a 2-step random access channel (2-step RACH). In the 2-step RACH, a message A (MsgA) is transmitted in a first step, and a message B (MsgB) is received in a second step. For the network to identify that the terminal type is the Redcap terminal as soon as possible, an early indication is supported in the 2-step RACH, that is, the network is informed in an implicit or explicit way by the MsgA that a terminal initiating the random access is a Redcap terminal.

### SUMMARY

To overcome the problem existing in the related art, the disclosure provides a random access method and a random access apparatus, and a storage medium.

According to a first aspect of embodiments of the disclosure, there is provided a random access method, performed by a terminal, and including:
sending a message A including a physical uplink shared channel, in which the message A further includes an early indication for indicating a terminal capability; and re-reporting the terminal capability corresponding to the early indication in response to a transmission failure of the physical uplink shared channel in the message A.

In an implementation, re-reporting the terminal capability corresponding to the early indication includes:
sending a message 3, in which the message 3 includes the terminal capability corresponding to the early indication.

In an implementation, the random access method further includes: determining a condition that allows the terminal to include the terminal capability in the message 3.

In an implementation, the condition that allows the terminal to include the terminal capability in the message 3 includes at least one of:
the terminal being configured with sending terminal capability information based on the message A including the physical uplink shared channel; receiving first indication information sent by a network device, the first indication information indicating supporting to include the terminal capability in the message 3; and meeting a predefined condition.

In an implementation, the predefined condition includes one of or a combination of:
a low-capacity terminal being configured with a separate initial uplink bandwidth part;
the initial uplink bandwidth part sharing a random access resource with a complex initial uplink bandwidth part;
a bandwidth of an initial uplink bandwidth part configured for a non-low-capacity terminal being greater than a bandwidth of the initial uplink bandwidth part configured for the low-capacity terminal; and
the non-low-capacity terminal and the low-capacity terminal being configured with different physical uplink control channel feedback resources.

In an implementation, the random access method further includes: receiving second indication information sent by the network device, in which the second indication information includes an enabled flag, and the flag being enabled represents that the terminal is allowed to include the terminal capability of the terminal in the message 3.

In an implementation, sending the message 3 includes:
sending the message 3 based on first configuration information, in which the first configuration information is different from second configuration information, the first configuration information is used for report of the message 3 in a two-step random access procedure, and the second configuration information is used for report of the message 3 in a four-step random access procedure.

In an implementation, sending the message 3 includes: sending the message 3 with a common control channel information field carrying the terminal capability corresponding to the early indication.

In an implementation, the common control channel information field carries a logical channel identifier dedicated to indicating the terminal capability.

According to a second aspect of embodiments of the disclosure, there is provided a random access method, performed by a network device, and including:
receiving a message A including a physical uplink shared channel, in which the message A further includes an early indication for indicating a terminal capability; and re-receiving the terminal capability corresponding to the early indication in response to a transmission failure of the physical uplink shared channel in the message A.

In an implementation, re-receiving the terminal capability corresponding to the early indication includes: receiving a message 3, in which the message 3 includes the terminal capability corresponding to the early indication.

In an implementation, the random access method further includes: determining a condition that allows the terminal to include the terminal capability in the message 3.

In an implementation, the condition that allows the terminal to include the terminal capability in the message 3 includes at least one of:
configured with sending the terminal capability information based on the message A including the physical uplink shared channel; sending first indication information for indicating supporting to include the terminal capability t in the message 3; and meeting a predefined condition.

In an implementation, the predefined condition includes one of or a combination of:
a low-capacity terminal being configured with a separate initial uplink bandwidth part; the initial uplink bandwidth part sharing a random access resource with a complex initial uplink bandwidth part; a bandwidth of an initial uplink bandwidth part configured for a non-low-capacity terminal being greater than a bandwidth of the initial uplink bandwidth part configured for the low-capacity terminal; and the non-low-capacity terminal and the low-capacity terminal being configured with different physical uplink control channel feedback resources.

In an implementation, the random access method further includes: sending second indication information, in which the second indication information includes an enabled flag, and the flag being enabled represents that the terminal is allowed to include the terminal capability in the message 3.

In an implementation, receiving the message 3 includes: receiving the message 3 based on first configuration information. The first configuration information is different from second configuration information, the first configuration information is used for reception of the message 3 in a two-step random access procedure, and the second configuration information is used for reception of the message 3 in a four-step random access procedure.

In an implementation, wherein receiving the message 3 includes: receiving the message 3 with a common control channel information field carrying the terminal capability corresponding to the early indication.

In an implementation, the common control channel information field carries a logical channel identifier dedicated to indicating the terminal capability.

According to a third aspect of embodiments of the disclosure, there is provided a random access apparatus, including:
a sending unit, configured to send a message A including a physical uplink shared channel, in which the message A further includes an early indication for indicating a terminal capability; and to re-report the terminal capability corresponding to the early indication in response to a transmission failure of the physical uplink shared channel in the message A.

In an implementation, the sending unit is configured to send a message 3, in which the message 3 includes the terminal capability corresponding to the early indication.

In an implementation, the random access apparatus further includes: a processing unit. The processing unit is configured to determine a condition that allows the terminal to include the terminal capability in the message 3.

In an implementation, the condition that allows the terminal to include the terminal capability in the message 3 includes at least one of:
the terminal being configured with sending terminal capability information based on the message A including the physical uplink shared channel; receiving first indication information sent by a network device, the first indication information indicating supporting to include the terminal capability in the message 3; and meeting a predefined condition.

In an implementation, the predefined condition includes one of or a combination of:
a low-capacity terminal being configured with a separate initial uplink bandwidth part; the initial uplink bandwidth part sharing a random access resource with a complex initial uplink bandwidth part; a bandwidth of an initial uplink bandwidth part configured for a non-low-capacity terminal being greater than a bandwidth of the initial uplink bandwidth part configured for the low-capacity terminal; and the non-low-capacity terminal and the low-capacity terminal being configured with different physical uplink control channel feedback resources.

In an implementation, the random access apparatus further includes: a receiving unit. The receiving unit is configured to receive second indication information sent by the network device. The second indication information includes an enabled flag, and the flag being enabled represents that the terminal is allowed to include the terminal capability of the terminal in the message 3.

In an implementation, the sending unit is configured to: send the message 3 based on first configuration information. The first configuration information is different from second configuration information, the first configuration information is used for report of the message 3 in a two-step random access procedure, and the second configuration information is used for report of the message 3 in a four-step random access procedure.

In an implementation, the sending unit is configured to send the message 3 the message 3 with a common control channel information field carrying the terminal capability corresponding to the early indication.

In an implementation, the common control channel information field carries a logical channel identifier dedicated to indicating the terminal capability.

According to a fourth aspect of embodiments of the disclosure, there is provided a random access apparatus, including:
a receiving unit, configured to receive a message A including a physical uplink shared channel, in which the message A further includes an early indication for indicating a terminal capability; and to re-receive the terminal capability corresponding to the early indication in response to a transmission failure of the physical uplink shared channel in the message A.

In an implementation, the receiving unit is configured to receive a message 3, in which the message 3 includes the terminal capability corresponding to the early indication.

In an implementation, the random access apparatus further includes a processing unit, configured to determine a condition that allows the terminal to include the terminal capability in the message 3.

In an implementation, the condition that allows the terminal to include the terminal capability in the message 3 includes at least one of:
configured with sending the terminal capability information based on the message A including the physical uplink shared channel; sending first indication information for indicating supporting to include the terminal capability in the message 3; and meeting a predefined condition.

In an implementation, the predefined condition includes one of or a combination of:
a low-capacity terminal being configured with a separate initial uplink bandwidth part; the initial uplink bandwidth part sharing a random access resource with a complex initial uplink bandwidth part; a bandwidth of an initial uplink bandwidth part configured for a non-low-capacity terminal being greater than a bandwidth of the initial uplink bandwidth part configured for the low-capacity terminal; and the non-low-capacity terminal and the low-capacity terminal being configured with different physical uplink control channel feedback resources.

In an implementation, the random access apparatus further includes: a sending unit. The sending unit is configured to send second indication information. The second indication information includes an enabled flag, and the flag being enabled represents that the terminal is allowed to include the terminal capability in the message 3.

In an implementation, the receiving unit is configured to: receive the message 3 based on first configuration information. The first configuration information is different from second configuration information, the first configuration information is used for reception of the message 3 in a two-step random access procedure, and the second configuration information is used for reception of the message 3 in a four-step random access procedure.

In an implementation, the receiving unit is configured to receive the message 3 with a common control channel information field carrying the terminal capability corresponding to the early indication.

In an implementation, the common control channel information field carries a logical channel identifier dedicated to indicating the terminal capability.

According to a fifth aspect of embodiments of the disclosure, there is provided a random access device, including:
a processor; and
a memory for storing instructions executable by the processor.

The processor is configured to execute the random access method according to the first aspect or any implementation of the first aspect.

According to a sixth aspect of embodiments of the disclosure, there is provided a random access device, including:
a processor; and a memory for storing instructions executable by the processor.

The processor is configured to execute the random access method according to the second aspect or any implementation of the second aspect.

According to a seventh aspect of embodiments of the disclosure, there is provided a storage medium. The storage medium has instructions stored thereon. A terminal is caused to execute the random access method according to the first aspect or any implementation of the first aspect when the instructions in the storage medium are executed by a processor of the terminal.

According to an eighth aspect of embodiments of the disclosure, there is provided a storage medium. The storage medium has instructions stored thereon. A network device is caused to execute the random access method according to the second aspect or any implementation of the second aspect when the instructions in the storage medium are executed by a processor of the network device.

The technical solution provided by the embodiments of the disclosure may include following beneficial effects. In case of a transmission failure of the message A including the early indication for indicating the terminal capability, the terminal capability included in the early indication is re-reported, such that the network device may perform an accurate scheduling based on the re-reported terminal capability.

It is to be understood that, both the foregoing general description and the following detailed description are exemplary and explanatory merely, and do not limit the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG 1 is a schematic diagram illustrating a wireless communication system according to an exemplary embodiment.
FIG 2 is a schematic diagram illustrating a 4-step random access procedure according to an exemplary embodiment.
FIG 3 is a schematic diagram illustrating a 2-step random access procedure according to an exemplary embodiment.
FIG 4 is a flow chart illustrating a random access method according to an exemplary embodiment.
FIG 5 is a flow chart illustrating a random access method according to an exemplary embodiment.
FIG 6 is a flow chart illustrating a random access method according to an exemplary embodiment.
FIG 7 is a flow chart illustrating a random access method according to an exemplary embodiment.
FIG 8 is a flow chart illustrating a random access method according to an exemplary embodiment.
FIG 9 is a flow chart illustrating a random access method according to an exemplary embodiment.
FIG 10 is a block diagram illustrating a random access apparatus according to an exemplary embodiment.
FIG 11 is a block diagram illustrating a random access apparatus according to an exemplary embodiment.
FIG 12 is a block diagram illustrating a random access device according to an exemplary embodiment.
FIG 13 is a block diagram illustrating a random access device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different accompanying drawings represent the same or similar elements unless otherwise represented. The implementations set forth in the following description of exemplary embodiments do not represent all implementations consistent with the disclosure.

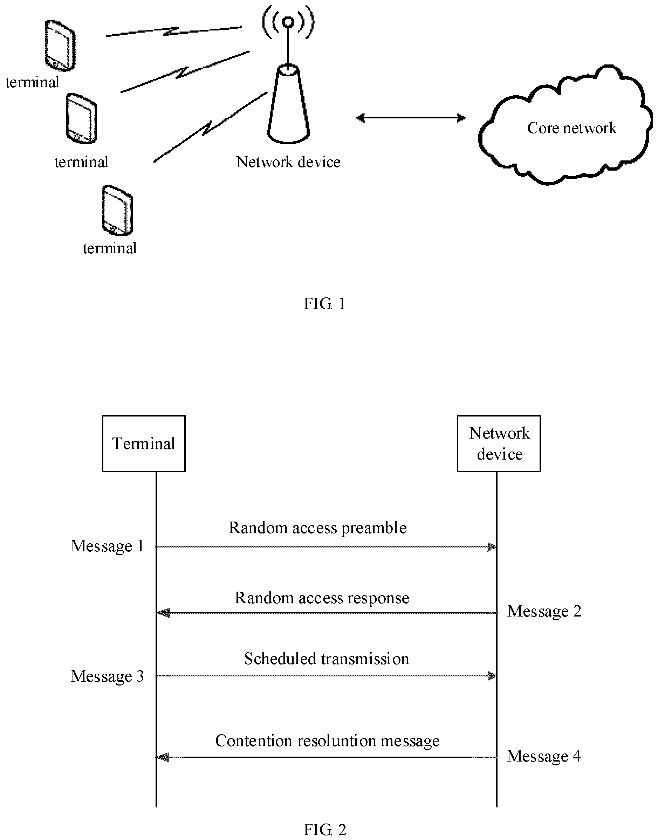

The disclosure provides a random access method. The random access method may be applied to a wireless communication system illustrated in FIG 1. As illustrated in FIG 1, a terminal accesses a network through a network device such as a base station or the like, and the network device and a core network complete backhaul and forward transmission of data to perform various communication services.

It may be understood that, the wireless communication system is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. Networks may be classified, according to capacities, rates, time delays and other factors of different networks, into a 2nd generation (2G) network, a 3G network, a 4G network, or a future evolution network, such as a 5G network. The 5G network may be referred to as a new radio (NR) network. For ease of description, the wireless communication network may be sometimes abbreviated as a network or a system in the disclosure. The network may include a radio access network (RAN) and a core network (CN) in the disclosure. The network includes a network device. For example, the network device may be a radio access network node, a core network device, and the like. The radio access network node may be called a base station. The network may provide a network service for the terminal through the network device. Different operators may provide different network services for the terminal. It may be understood that different operators correspond to different operator networks.

The terminal, which may be referred to as a user equipment (UE), a mobile station (MS), a mobile terminal (MT), etc., is a device that provides speech and/or data connectivity to a user. For example, the terminal may be a handheld device with a wireless connection function, a vehicle-mounted device, or the like. For example, the terminal may be a mobile phone, a pocket personal computer (PPC), a palmtop computer, a personal digital assistant (PDA), a notebook computer, a tablet, a wearable device, a vehicle-mounted device, or the like.

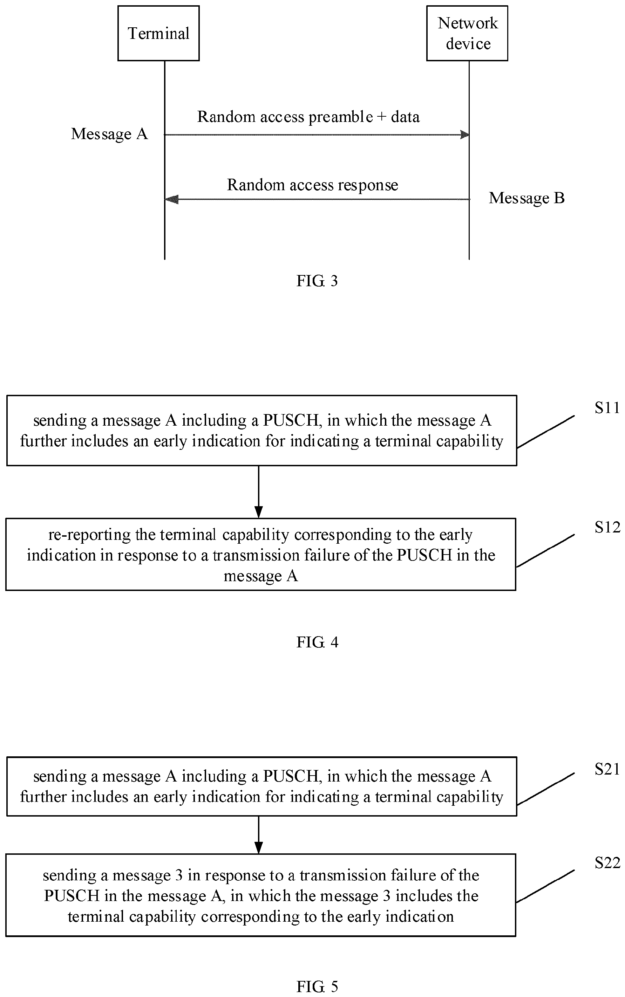

The terminal needs to complete random access when the terminal intends to access the network. A four-step random access and a two-step random access (2-step RACH) are introduced in the related art. FIG 2 is a schematic diagram illustrating a 4-step random access procedure. Referring to FIG 4, a UE sends a contention-based physical random access channel (PRACH) preamble (or a random access preamble), also known as a message 1 (Msg1). After such preamble is detected, a network device sends a random access response (RAR), also called a message 2 (Msg2). The RAR includes an identifier (ID) of the detected preamble, a time advance command, a temporary cell radio network temporary identifier (C-RNTI) or (TC-RNTI) and uplink grant scheduling for a physical uplink shared channel (PUSCH) transmission from the terminal. Scheduled transmission which is called a Msg3 is performed. The terminal sends the message 3 (Msg3) in response to a RAR including a contention resolution ID. The network device sends a contention resolution message which called a message 4 (Msg4) using the contention resolution ID when receiving the Msg3. The terminal receives the Msg4, and sends an acknowledgement on a physical uplink control channel (PUCCH) when the contention resolution ID is found, thus completing the four-step random access procedure.

The four-step random access procedure includes two round-trip cycles between the terminal and the network device, which not only increases the time delay, but also generates an extra control signaling overhead. A motivation of the 2-step RACH is to reduce the time delay and the control signaling overhead by having a single round-trip cycle between the terminal and the network device, which is achieved by combining the preamble (Msg1) and the scheduled PUSCH transmission (Msg3) into a single message which is called a message A (MsgA) from the terminal. Then, the random access response (Msg2) and the contention resolution message (Msg4) are combined into a single message which is called a message B (MsgB) from the network device to the terminal. FIG 3 is a schematic diagram illustrating a 2-step random access procedure. In addition, for an unlicensed spectrum, the 2-step RACH may reduce the number of messages sent from the terminal and the network device, and reduce the number of attempts of listen before talk (LBT).

The MsgA is consisted of the PRACH preamble and the PUSCH transmission, which are called a MsgA PRACH and a MsgA PUSCH respectively. The MsgA PRACH preamble is independent of a four-step RACH preamble, but may be transmitted in a same PRACH occasion (RO) as the four-step RACH preamble or transmitted in a separate RO. The PUSCH transmission is organized into a PUSCH occasion (PO) spanning multiple symbols and physical resource blocks (PRBs), with a guard band between an optional guard period and continuous paging occasions (POs). Each PO is consisted of multiple demodulation reference signal (DMRS) ports and DMRS sequences, and each pair of DMRS port /DMRS sequence is called a PUSCH resource unit (PRU). The 2-step RACH at least supports a one-to-one and multiple-to-one mapping between the preambles and the PRUs.

The terminal may obtain a random access response (MsgB) sent by the network device after sending the MsgA. Based on a result of detection and analysis of the MsgA by the network device, there are three possible situations as follows.
1. The network device does not detect the MsgA PRACH --> No response is sent back to the terminal --> The terminal retransmits the MsgA or returns to the four-step RACH from the transmission of Msg1.
2. The network device detects a MsgA preamble but fails to decode the MsgA-PUSCH --> The network device sends back a fallback RAR to the terminal using a RAPID (random access preamble ID) and the uplink grant of Msg-APUSCH retransmission-> The terminal returns to the four-step RACH by sending the Msg3 (retransmission of the MsgA-PUSCH) after receiving the fallback RAR.
3. The network device detects the MsgA and decodes the MsgA-PUSCH successfully --> The network device sends the contention resolution ID indicating that the MsgA is successfully received to the terminal --> The two-step RACH procedure is successfully completed.

As mentioned above, the MsgB is consisted of the random access response and the contention resolution message. The network device sends the random access response when detecting the preamble but is unable to successfully decode a corresponding PUSCH transmission. The network device sends the contention resolution message after successfully decoding the PUSCH transmission. The MsgB may include a fallback indication, a fallback RAR or a success RAR. A single MsgB may include one or more terminals. The fallback RAR includes a random access preamble ID (RAPID) which is an uplink license for retransmitting a MsgA PUSCH payload and a time advance command. The success RAR is consisted of at least one of the contention resolution ID, the C-RNTI and the timing advance (TA) command.

A new terminal type designed in the 5G NR is a low-capacity terminal. The low-capacity terminal is sometimes called a reduced- capability UE, a Redcap terminal, or an NR-lite for short. In embodiments of the disclosure, the new terminal type is called the Redcap terminal. The Redcap terminal supports the 2-step RACH, and supports an early indication including a terminal capability in the 2-step RACH in order for the network device to identify that the terminal type is the Redcap terminal type as soon as possible. That is, in the MsgA, the network is informed in an implicit or explicit way that the terminal initiating the random access is the Redcap terminal.

In the relate art, uplink information of the 2-step RACH includes the MsgA PRACH and the MsgA PUSCH, and performing the early indication based on these two pieces of information is under discussion. When the early indication is performed based on the MsgA PUSCH, a case may occur that the network device correctly detects the MsgA PUSCH, but cannot correctly demodulate the MsgA PUSCH. In a conventional way, the network device may transmit the fallback RAR to schedule the Msg3. The terminal may further transmit the Msg3 based on a network indication, and then the network device schedules the Msg4. However, a PUCCH transmission mode and a transmission position for the Redcap terminal may be different from those for a non-Redcap terminal. Therefore, when the terminal is configured with the MsgA PUSCH-based early indication, it is a problem to be solved that how to enable the network device to know the terminal type accurately and to schedule the PUCCH accurately when the transmission of the MsgA PUSCH fails.

Embodiments of the disclosure provide a random access method. When a terminal is configured with a MsgA PUSCH-based early indication, the terminal capability indicated in the early indication is re-reported in a case that a transmission of the MsgA PUSCH fails, such that the network device may accurately know the terminal type.

FIG 4 is a flow chart illustrating a random access method according to an exemplary embodiment. As illustrated in FIG 4, the random access method is performed by a terminal, including the following.

Step S11, a message A including a PUSCH is sent, in which the message A includes an early indication for indicating a terminal capability.

In embodiments of the disclosure, the step S11 may be understood as a first step for the terminal to perform the 2-step RACH based on the early indication of the MsgA PUSCH

Step S12, the terminal capability corresponding to the early indication is re-reported in response to a transmission failure of the PUSCH in the message A.

In embodiments of the disclosure, the transmission failure of the PUSCH in the message A may be understood as that the network device correctly detects the MsgA PUSCH but cannot correctly demodulate the MsgA PUSCH when the terminal performs the early indication based on the MsgA PUSCH. The terminal may determine that the transmission of the PUSCH in the message A fails based on a fallback RAR.

It may be understood that, the terminal capability involved in embodiments of the disclosure may be one or more of communication capabilities including a transceiving bandwidth, a number of transceiving antennas, a maximum number of bits in a transmission block, a processing time delay and the like which may determine the terminal type.

It may be further understood that, the terminal capability involved in embodiments of the disclosure may be the terminal type, the consistency of which should be understood in the field.

Further, the terminal capability or the terminal type involved in embodiments of the disclosure may include a first type terminal and a second type terminal.

The first type terminal and the second type terminal may have different capabilities in embodiments of the disclosure. The capability difference of the terminals may be that one or more of the transceiving bandwidth, the number of transceiving antennas, the maximum number of bits in a transmission block, and the processing time delay are different. For example, the first type terminal may be a common terminal (a non-Redcap terminal) and the second type terminal may be the Redcap terminal.

In the related art, the terminal may transmit the message 3 based on the fallback RAR, such that the network device may schedule the message 4 for transmission scheduling of the PUCCH.

In an implementation, in embodiments of the disclosure, the terminal determines that the transmission of the PUSCH in the message A fails, and may re-report the terminal capability corresponding to the early indication based on the message 3.

FIG 5 is a flow chart illustrating a random access method according to an exemplary embodiment. As illustrated in FIG 5, the random access method is performed by a terminal, including the following.

Step S21, a message A including a PUSCH is sent, in which the message A includes an early indication for indicating a terminal capability.

Step S22, a message 3 is sent in response to a transmission failure of the PUSCH in the message A, in which, the message 3 includes the terminal capability corresponding to the early indication.

In embodiments of the disclosure, when the terminal is configured with a MsgA PUSCH-based early indication and supports the transmission failure of the MsgA PUSCH, and when the terminal is required to continue transmitting the Msg3, a terminal type or a terminal capability is reported in the Msg3.

In embodiments of the disclosure, when the terminal reports the terminal capability in the Msg3, a condition that allows the terminal to include the terminal capability in the message 3 may be determined by following ways.

Way 1, when the terminal is configured with sending terminal capability information based on the message A including the PUSCH, it is determined that the condition that allows the terminal to include the terminal capability in the message 3 is met. In an example, a Redcap terminal is configured with a MsgA PUSCH-based early indication, and the terminal allows to re-report the terminal capability in the message 3 by default. The terminal carries the terminal capability information in the Msg3 by default. It may be understood that the terminal determines by default that the network supports reporting the terminal capability based on the Msg3.

Way 2, the condition that allows the terminal to include the terminal capability in the message 3 may be determined based on configuration information of a network device. For example, the network device may send indication information, hereinafter referred to as first indication information. The first indication information may be, such as, a broadcast signaling. The network device defines an information field in the first indication information for indicating whether to support reporting the terminal capability in the Msg3. The network device sends the first indication information to the terminal to indicate whether the terminal is allowed to report the terminal capability in the Msg3. The terminal receives the first indication information sent by the network device for indicating the support of including the terminal capability in the message 3, and determines that the condition for allowing the terminal to include the terminal capability in the message 3 is met.

Way 3: it may be determined that the terminal is allowed to include the terminal capability in the message 3 based on a predefined condition.

In an implementation, the predefined condition includes one of or a combination of:
a low-capacity terminal being configured with a separate initial uplink bandwidth part (initial UL BWP); the initial uplink bandwidth part sharing a random access resource with a complex initial uplink bandwidth part (a legacy initial UL BWP); a bandwidth of an initial UL BWP configured for a non-RedCap terminal being greater than a bandwidth of the initial UL BWP configured for a RedCap terminal, such a maximum UE BWP; and the non-RedCap terminal and the RedCap terminal being configured with different PUCCH feedback resources.

In embodiments of the disclosure, the terminal may determine that the terminal is allowed to re-report the terminal capability in the Msg3 based on one or more of the ways 1, 2 and 3.

In the random access method provided by embodiments of the disclosure, the terminal may send the message 3 including the terminal capability when determining that one or more of the way 1, the way 2 and the way 3 are met, so as to re-report the terminal capability corresponding to the early indication based on the message 3 when it is determined that the transmission of the PUSCH in the message A fails. Such way may be understood as that a Msg3-based early indication is enabled by default as long as one or more of the above ways 1, 2 and 3 are met. The Msg3-based early indication may be understood as that, when the terminal is configured with the MsgA PUSCH-based early indication, and when the terminal supports that the terminal is required to continue to transmit the Msg3 when the transmission of MsgA PUSCH fails, the terminal re-reports the terminal type or the terminal capability in the Msg3.

Furthermore, in embodiments of the disclosure, whether the terminal re-reports the terminal type or the terminal capability in the Msg3 may be indicated by the network.

In an implementation, in embodiments of the disclosure, the network device may send an indication signaling for enabling or disabling the message 3 (Msg3 enabled/disabled) to the terminal. The indication signaling is hereinafter referred to as second indication information. The second indication information is set with a flag of Msg3 enabled/disabled. The flag being enabled represents allowing the terminal to include the terminal capability of the terminal in the message 3. The flag being disabled represents not allowing the terminal to include the terminal capability of the terminal in the message 3.

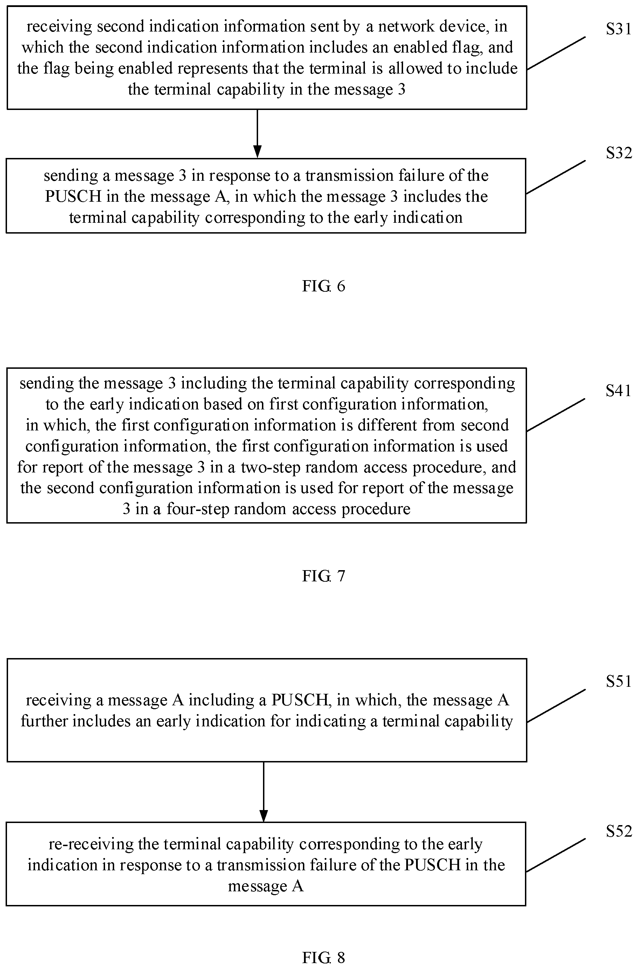

FIG 6 is a flow chart illustrating a random access method according to an exemplary embodiment. As illustrated in FIG 6, the random access method is performed by a terminal, including the following.

Step S31, second indication information sent by a network device is received, the second indication information includes an enabled flag, and the flag being enabled represents that the terminal is allowed to include a terminal capability of the terminal in a message 3.

Step S32, a message 3 is sent in response to a transmission failure of the PUSCH in the message A, in which, the message 3 includes the terminal capability corresponding to the early indication.

In an implementation, for the conditions of the way 1 and the way 3 above, the terminal may add the terminal capability in the message 3 by default. That is, the terminal expects the flag to be in an enabled state. Therefore, it may be understood that the flag in the second indication information is set to be enabled by default, such that the terminal may re-report the terminal capability based on the way 1 and the way 3 according to the message 3.

In another implementation, for the way 2, the terminal may determine whether to add the terminal capability in the message 3 based on the configuration of the network. Therefore, for the way 2, when the flag is in the enabled state, and the first indication information indicates that the terminal is allowed to include the terminal capability in the message 3, the terminal may re-report the terminal capability based on the message 3.

In an example, the terminal receives the second indication information sent by the network device. The second indication information includes the enabled flag, and the flag being enabled represents that the terminal is allowed to include the terminal capability of the terminal in the message 3. The terminal receives the first indication information. The first indication information indicates allowing the terminal to report the terminal capability in the Msg3, and the terminal sends the message 3 and includes the terminal capability in the message 3.

In another example, the terminal receives the second indication information sent by the network device. The second indication information includes the enabled flag, and the flag being enabled represents that the terminal is allowed to include the terminal capability of the terminal in the message 3. The terminal receives the first indication information. The first indication information indicates that the terminal is not allowed to report the terminal capability in the Msg3, and then the terminal does not include the terminal capability in the message 3.

It may be understood that, in a case that the flag is in a disabled state, the terminal may not transmit the Msg3 including the terminal capability even if the terminal meets the conditions of the above ways 1, 2 and 3.

The random access method provided by embodiments of the disclosure may be understood as a method for reporting the terminal capability based on the Msg3 in 2-step RACH. The configuration information (hereinafter referred to as first configuration information) for reporting the terminal capability based on the Msg3 in the 2-step RACH may be different from the configuration information (hereinafter referred to as second configuration information) for reporting the terminal capability based on the Msg3 in the 4-step RACH. For example, the terminal may be allowed to report the terminal capability based on the Msg3 in the 2-step RACH, but reporting the terminal capability based on Msg3 is not supported in the 4-step RACH.

FIG 7 is a flow chart illustrating a random access method according to an exemplary embodiment. The random access method may be executed alone or together with other embodiments. As illustrated in FIG 7, the random access method is performed by a terminal, and including the following.

Step S41, a message 3 including the terminal capability corresponding to the early indication is sent based on first configuration information.

The first configuration information is different from second configuration information, the first configuration information is used for report of the message 3 in a two-step random access procedure, and the second configuration information is used for report of the message 3 in a four-step random access procedure.

Further, in embodiments of the disclosure, in the 2-step RACH, the terminal capability may be carried by a common control channel (CCCH) of the message 3 when the terminal capability is reported based on the message 3. That is, the terminal may send the message 3 whose CCCH field carries the terminal capability corresponding to the early indication.

In an implementation, the CCCH field carries a logical channel identify (LCID) dedicated to indicating the terminal capability. For example, a terminal type is reported by carrying the LCID dedicated to Redcap in the CCCH field in the Msg3.

In the random access method provided by the embodiments of the disclosure, when the terminal is configured with the early indication based on the MsgA PUSCH in the 2-step RACH, and when the Redcap terminal fails to perform the early indication, the terminal capability or the terminal type is re-reported in the Msg3, such that the network device may accurately determine the terminal type and perform accurate transmission scheduling.

Based on a same concept, embodiments of the disclosure further provide a random access method executed by a network device.

FIG 8 is a flow chart illustrating a random access method according to an exemplary embodiment. The random access method may be executed alone or together based on other embodiments. As illustrated in FIG 8, the random access method is performed by a network device and includes the following.

Step S51, a message A including a PUSCH is received, in which the message A further includes an early indication for indicating a terminal capability.

Step S52, the terminal capability corresponding to the early indication is re-received in response to a transmission failure of the physical uplink shared channel in the message A.

In an implementation, re-receiving the terminal capability corresponding to the early indication includes: receiving a message 3. The message 3 includes the terminal capability corresponding to the early indication.

In embodiments of the disclosure, the network device may determine a condition that allows a terminal to include the terminal capability in the message 3. The terminal capability corresponding to the early indication is re-received through the message 3 in a case that the condition is met.

In an implementation, the condition that allows the terminal to include the terminal capability in the message 3 includes at least one of:
configured with sending the terminal capability information based on the message A including the PUSCH; sending first indication information for indicating supporting to include the terminal capability in the message 3; and meeting a predefined condition.

In an implementation, the predefined condition includes one of or a combination of: a low-capacity terminal being configured with a separate initial uplink bandwidth part; the initial uplink bandwidth part sharing a random access resource with a complex initial uplink bandwidth part; a bandwidth of an initial uplink bandwidth part configured for a non-low-capacity terminal being greater than a bandwidth of the initial uplink bandwidth part configured for the low-capacity terminal; and the non-low-capacity terminal and the low-capacity terminal being configured with different physical uplink control channel feedback resources.

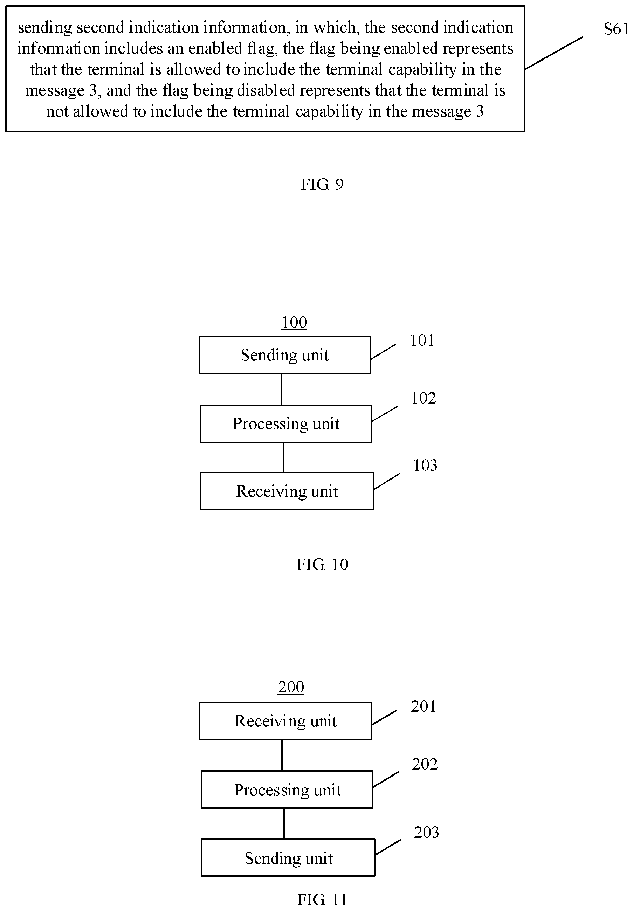

FIG 9 is a flow chart illustrating a random access method according to an exemplary embodiment. The random access method may be executed alone or together based on other embodiments. As illustrated in FIG 9, the random access method is performed by a network device and includes the following.

Step S61, second indication information is sent, in which the second indication information includes an enabled flag. The flag being enabled represents that a terminal is allowed to include the terminal capability in the message 3, and the flag being disabled represents that the terminal is not allowed to include the terminal capability in the message 3.

In an implementation, in embodiments of the disclosure, the second indication information sent by the network device includes the enabled flag to allow the terminal to include the terminal capability in the message 3.

In an implementation, the random access method provided by embodiments of the disclosure may be understood as performing terminal capability reception based on the Msg3 in the 2-step RACH. In the 2-step RACH, the Msg3 including the terminal capability is received based on first configuration information. The first configuration information is different from second configuration information. The first configuration information is used for reception of the message 3 in the 2-step RACH, and the second configuration information is used for reception of the message 3 in the 4-step RACH.

Further, in embodiments of the disclosure, in the 2-step RACH, when the terminal capability is re-received based on the message 3, the terminal capability may be carried through a CCCH field of the message 3. That is, the CCCH field of the message 3 carries the terminal capability corresponding to the early indication.

In an implementation, the CCCH field carries an LCID dedicated to indicating the terminal capability. For example, the LCID dedicated to the Redcap terminal is carried in the CCCH field in the Msg3 to receive and obtain the terminal capability or the terminal type.

It may be understood that, the random access method provided by embodiments of the disclosure may be applied to the Redcap terminal.

With the random access method provided by embodiments of the disclosure, when the terminal is configured with the early indication based on the MsgA PUSCH in the 2-step RACH, and the Redcap terminal fails to perform the early indication, the terminal capability or the terminal type is re-received in the Msg3, such that the network device may determine the terminal type accurately and perform accurate transmission scheduling.

It may be understood that, the random access method provided by embodiments of the disclosure may be applied to an implementation for implementing re-reporting the terminal capability based on the message 3 through an interaction between the terminal and the network device.

It should be noted that, those skilled in the art may understand that the above various implementations/embodiments involved in embodiments of the disclosure may be used together with the above embodiments or independently. Whether used alone or in combination with the above embodiments, the implementing principle is similar. In embodiments of the disclosure, some embodiments are described by taking the implementations used together. Of course, those skilled in the art may understand that, such description is not a limitation of embodiments of the disclosure.

Based on the same conception, embodiments of the disclosure further provide a random access apparatus.

It may be understood that, in order to implement the above-mentioned functions, the random access apparatus provided by the embodiments of the disclosure includes hardware structures and/or software modules for performing various functions correspondingly. The embodiments of the disclosure may be implemented in a form of hardware or a combination of hardware and computer software, in combination with units and algorithm steps of each example disclosed in the embodiments of the disclosure. Whether a function is performed by the hardware or by the computer software to drive the hardware depends on a specific application and design constraints of the technical solution. For specific applications, those skilled in the art may use different methods to implement the described function, but such an implementation should not be regarded as extending beyond the scope of the technical solutions of the embodiments of the disclosure.

FIG 10 is a block diagram illustrating a random access apparatus according to an exemplary embodiment. Referring to FIG 10, the random access apparatus 100 may be provided as the terminal involved in the above embodiments, including a sending unit 101.

The sending unit 101 is configured to send a message A including a physical uplink shared channel, in which the message A further includes an early indication for indicating a terminal capability; and to re-report the terminal capability corresponding to the early indication in response to a transmission failure of the physical uplink shared channel in the message A.

In an implementation, the sending unit 101 is configured to send a message 3, in which the message 3 includes the terminal capability corresponding to the early indication.

In an implementation, the random access apparatus 100 further includes: a processing unit 102. The processing unit 102 is configured to determine a condition that allows the terminal to include the terminal capability in the message 3.

In an implementation, the condition that allows the terminal to include the terminal capability in the message 3 includes at least one of:
the terminal being configured with sending terminal capability information based on the message A including the physical uplink shared channel; receiving first indication information sent by a network device, the first indication information indicating supporting to include the terminal capability in the message 3; and meeting a predefined condition.

In an implementation, the predefined condition includes one of or a combination of:
a low-capacity terminal being configured with a separate initial uplink bandwidth part; the initial uplink bandwidth part sharing a random access resource with a complex initial uplink bandwidth part; a bandwidth of an initial uplink bandwidth part configured for a non-low-capacity terminal being greater than that of the initial uplink bandwidth part configured for the low-capacity terminal; and the non-low-capacity terminal and the low-capacity terminal being configured with different physical uplink control channel feedback resources.

In an implementation, the random access apparatus 100 further includes: a receiving unit 103. The receiving unit 103 is configured to receive second indication information sent by the network device. The second indication information includes an enabled flag, and the flag being enabled represents that the terminal is allowed to include the terminal capability of the terminal in the message 3.

In an implementation, the sending unit 101 is configured to: send the message 3 based on first configuration information. The first configuration information is different from second configuration information, the first configuration information is used for report of the message 3 in a two-step random access procedure, and the second configuration information is used for report of the message 3 in a four-step random access procedure.

In an implementation, the sending unit 101 is configured to send the message 3 the message 3 with a CCCH field carrying the terminal capability corresponding to the early indication.

In an implementation, the CCCH field carries an LCID dedicated to indicating the terminal capability.

FIG 11 is a block diagram illustrating a random access apparatus according to an exemplary embodiment. Referring to FIG 11, the random access apparatus 200 may be provided as the network device involved in the above embodiments and includes a receiving unit 201.

The receiving unit 201 is configured to receive a message A including a physical uplink shared channel, in which the message A further includes an early indication for indicating a terminal capability; and to re-receive the terminal capability corresponding to the early indication in response to a transmission failure of the physical uplink shared channel in the message A.

In an implementation, the receiving unit 201 is configured to receive a message 3, in which the message 3 includes the terminal capability corresponding to the early indication.

In an implementation, the random access apparatus 200 further includes a processing unit 202, configured to determine a condition that allows the terminal to include the terminal capability in the message 3.

In an implementation, the condition that allows the terminal to include the terminal capability in the message 3 includes at least one of:
configured with sending the terminal capability information based on the message A including the physical uplink shared channel; sending first indication information for indicating supporting to include the terminal capability in the message 3; and meeting a predefined condition.

In an implementation, the predefined condition includes one of or a combination of:
a low-capacity terminal being configured with a separate initial uplink bandwidth part; the initial uplink bandwidth part sharing a random access resource with a complex initial uplink bandwidth part; a bandwidth of an initial uplink bandwidth part configured for a non-low-capacity terminal being greater than that of the initial uplink bandwidth part configured for the low-capacity terminal; and the non-low-capacity terminal and the low-capacity terminal being configured with different physical uplink control channel feedback resources.

In an implementation, the random access apparatus 200 further includes: a sending unit 203. The sending unit 203 is configured to send second indication information. The second indication information includes an enabled flag, and the flag being enabled represents that the terminal is allowed to include the terminal capability in the message 3.

In an implementation, the receiving unit 201 is configured to: receive the message 3 based on first configuration information. The first configuration information is different from second configuration information, the first configuration information is used for reception of the message 3 in a two-step random access procedure, and the second configuration information is used for reception of the message 3 in a four-step random access procedure.

In an implementation, the receiving unit 201 is configured to receive the message 3 with a CCCH field carrying the terminal capability corresponding to the early indication.

In an implementation, the CCCH field carries an LCID dedicated to indicating the terminal capability.

Regarding to the apparatus in the above embodiments, a detailed way in which each module performs an operation has been described in detail in embodiments of the method, which is not be described in detail here.

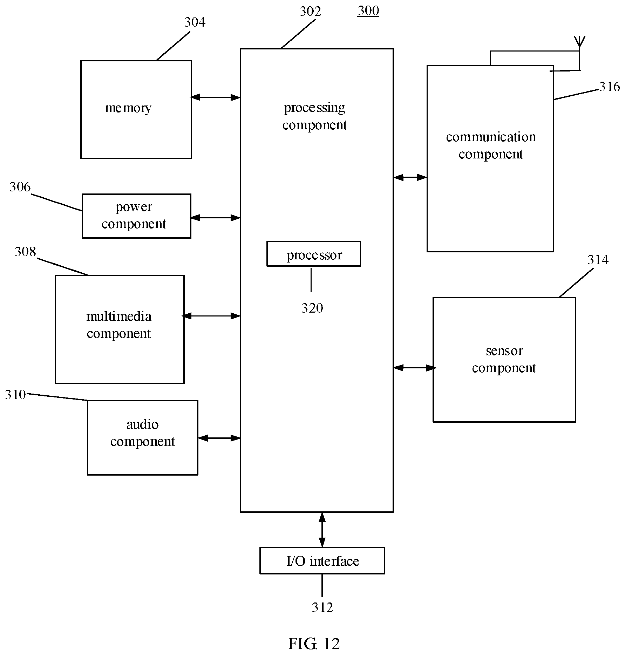

FIG 12 is a block diagram illustrating a random access device 300 according to an exemplary embodiment. For example, the device 300 may be a mobile phone, a computer, a digital broadcast terminal, a messaging receiving and sending device, a game console, a tablet, a medical device, a fitness device, a personal digital assistant, or the like.

Referring to FIG 12, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, telephone calls, data communications, camera operations, and recording operations. The processing component 302 may include one or more processors 320 to execute instructions to perform all or part of the steps in the above described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, video, etc. The memory 304 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone ("MIC") configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 also includes a speaker to output audio signals.

The I/O interface 312 provides an interface between the processing component 302 and peripheral interface modules, such as a keyboard, a click wheel, a button and the like. The button may include, but not limited to, a home button, a volume button, a starting button, and a locking button.

The sensor component 314 includes one or more sensors to provide state assessments of various aspects of the device 300. For example, the sensor component 314 may detect an open/closed state of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may also include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wirelessly, between the device 300 and other devices. The device 300 may access a wireless network based on a communication standard, such as Wi-Fi^{™}, 2G, or 3G, or a combination thereof. In an exemplary embodiment, the communication component 316 receives a broadcast signal from an external broadcast management system or broadcast associated information via a broadcast channel. In an exemplary embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In an exemplary embodiment, there is also provided a non-transitory computer-readable storage medium, such as the memory 304, including instructions that, when executed by the processor 320 of the device 300, to perform any of the above-described methods. For example, the non-transitory computer-readable storage medium may be a ROM, a RAM, a CD-ROM, a magnetic tape, a floppy disc, an optical data storage device, and the like.

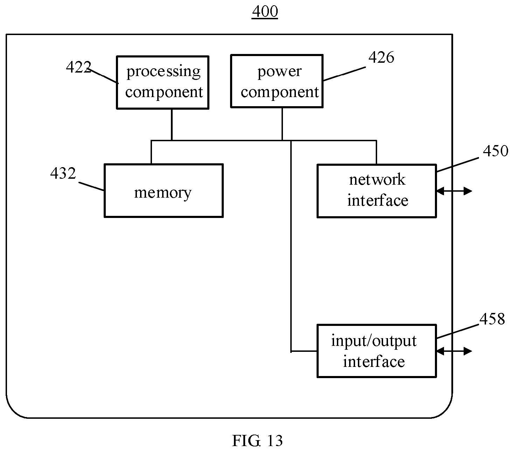

FIG 13 is a block diagram illustrating a random access device 400 according to an exemplary embodiment. For example, the device 400 may be provided as a network device. Referring to FIG 13, the device 400 includes a processing component 422 and a memory resource represented by a memory 432. The processing component 422 may further include one or more processors. The memory resource is configured to store instructions executable by the processing component 422, such as an application. The application stored in the memory 432 may include one or more modules corresponding to a set of instructions. In addition, the processing component 422 is configured to execute the instructions to perform the above methods.

The device 400 also includes a power component 426 configured to operate a power management of the device 400, a wired or wireless network interface 450 configured to connect the device 400 to the network, and an input/output (I/O) interface 458. The device 400 may operate an operating system stored in the memory 432, such as Windows Server ^{™}, Mac OS X^{™}, Unix ^{™}, Linux ^{™}, Free BSD^{™}, or the like.

In an exemplary embodiment, the device 400 includes: a processor, and a memory for storing executable instructions by the processor. The processor is configured to execute the above random access method.

In an exemplary embodiment, there is also provided a non-transitory computer-readable storage medium including instructions, such as a memory 432 including instructions. The above instructions may be executed by the processing component 422 of the device 400 to complete the above method. For example, the on-transitory computer-readable storage medium may be a ROM, a RAM, a CD-ROM, a magnetic tape, a floppy disk, an optical data storage device, etc.

It may be understood that "network" and "system" are sometimes used interchangeably in the disclosure, those skilled in the art may understand their meanings. It is further understood that "a plurality" in this disclosure refers to two or more, and other quantifiers are similar thereto. Term "and/or", which describes an associated relationship of associated objects, may refer to three relationships. For example, A and/or B means that A exists alone, A and B exist at the same time, and B exists alone. A character "j" generally indicates that contextual objects are in an "or" relationship. Terms "a/an", "said" and "the" in the singular form are intended to include plural forms, unless clearly indicated in the context otherwise.

It is further understood that terms such as "first", "second" and the like are used to describe various information, these information should not be limited by these terms. These terms are only used to distinguish information of the same type from each other and do not denote a particular order or degree of importance. As a matter of fact, the terms such as "first", "second" and the like may be used interchangeably. For example, without departing from the scope of embodiments of the disclosure, first information may be referred to as second information, and similarly, the second information may be referred to as the first information.

It is further understood that although operations are described in a specific order in the accompanying drawings in the embodiments of the disclosure, it should not be understood that these operations are required to be performed in the specific order illustrated or in a serial order, or that all of the operations illustrated are required to be performed to obtain desired results. In some circumstances, multitasking and parallel processing may be advantageous.

Other embodiments of the disclosure will be apparent to those skilled in the art from consideration of the specification and practice of the disclosure disclosed here. The disclosure is intended to cover any variations, uses, or adaptations of the disclosure following the general principles thereof and including common knowledge or conventional technical means illustrated in the art but not disclosed in the disclosure.

It should be understood that the disclosure is not limited to the exact construction that has been described above and illustrated in the accompanying drawings, and that various modifications and changes may be made without departing from the scope thereof. The scope of the disclosure is only limited by the appended claims.

## Claims

1. A random access method, performed by a terminal, comprising:
sending a message A comprising a physical uplink shared channel, wherein the message A further comprises an early indication for indicating a terminal capability; and
re-reporting the terminal capability corresponding to the early indication in response to a transmission failure of the physical uplink shared channel in the message A.

2. The random access method of claim 1, wherein re-reporting the terminal capability corresponding to the early indication comprises:
sending a message 3, wherein the message 3 comprises the terminal capability corresponding to the early indication.

3. The random access method of claim 2, further comprising:
determining a condition that allows the terminal to comprise the terminal capability in the message 3.

4. The random access method of claim 3, wherein the condition that allows the terminal to comprise the terminal capability in the message 3 comprises at least one of:
the terminal being configured with sending terminal capability information based on the message A comprising the physical uplink shared channel;
receiving first indication information sent by a network device, the first indication information indicating supporting to comprise the terminal capability in the message 3; or
meeting a predefined condition.

5. The random access method of claim 4, wherein the predefined condition comprises one of or a combination of:
a low-capacity terminal being configured with a separate initial uplink bandwidth part;
the initial uplink bandwidth part sharing a random access resource with a complex initial uplink bandwidth part;
a bandwidth of an initial uplink bandwidth part configured for a non-low-capacity terminal being greater than a bandwidth of the initial uplink bandwidth part configured for the low-capacity terminal; or
the non-low-capacity terminal and the low-capacity terminal being configured with different physical uplink control channel feedback resources.

6. The random access method of any of claims 2 to 5, further comprising:
receiving second indication information sent by a network device, wherein the second indication information comprises an enabled flag, and determining that the terminal is allowed to re-report the terminal capability based on the message 3, wherein the flag being enabled represents that the terminal is allowed to comprise the terminal capability of the terminal in the message 3.

7. The random access method of claim 2, wherein sending the message 3 comprises:
sending the message 3 based on first configuration information;
wherein the first configuration information is different from second configuration information, the first configuration information is used for report of the message 3 in a two-step random access procedure, and the second configuration information is used for report of the message 3 in a four-step random access procedure.

8. The random access method of claim 2, wherein sending the message 3 comprises:
sending the message 3 with a common control channel information field carrying the terminal capability corresponding to the early indication.

9. The random access method of claim 8, wherein the common control channel information field carries a logical channel identifier dedicated to indicating the terminal capability.

10. A random access method, performed by a network device, comprising:
receiving a message A comprising a physical uplink shared channel, wherein the message A further comprises an early indication for indicating a terminal capability; and
re-receiving the terminal capability corresponding to the early indication in response to a transmission failure of the physical uplink shared channel in the message A.

11. The random access method of claim 10, wherein re-receiving the terminal capability corresponding to the early indication comprises:
receiving a message 3, wherein the message 3 comprises the terminal capability corresponding to the early indication.

12. The random access method of claim 11, further comprising:
determining a condition that allows a terminal to comprise the terminal capability in the message 3.

13. The random access method of claim 12, wherein the condition that allows the terminal to comprise the terminal capability in the message 3 comprises at least one of:
configured with sending terminal capability information based on the message A comprising the physical uplink shared channel;
sending first indication information for indicating supporting to comprise the terminal capability in the message 3; or
meeting a predefined condition.

14. The random access method of claim 13, wherein the predefined condition comprises one of or a combination of:
a low-capacity terminal being configured with a separate initial uplink bandwidth part;
the initial uplink bandwidth part sharing a random access resource with a complex other initial uplink bandwidth part;
a bandwidth of an initial uplink bandwidth part configured for a non-low-capacity terminal being greater than a bandwidth of the initial uplink bandwidth part configured for the low-capacity terminal; or
the non-low-capacity terminal and the low-capacity terminal being configured with different physical uplink control channel feedback resources.

15. The random access method of any of claims 11 to 14, further comprising:
sending second indication information, wherein the second indication information comprises an enabled flag, and the flag being enabled represents that a terminal is allowed to comprise the terminal capability in the message 3.

16. The random access method of claim 11, wherein receiving the message 3 comprises:
receiving the message 3 based on first configuration information,
wherein the first configuration information is different from second configuration information, the first configuration information is used for reception of the message 3 in a two-step random access procedure, and the second configuration information is used for reception of the message 3 in a four-step random access procedure.

17. The random access method of claim 11, wherein receiving the message 3 comprises:
receiving the message 3 with a common control channel information field carrying the terminal capability corresponding to the early indication.

18. The random access method of claim 17, wherein the common control channel information field carries a logical channel identifier dedicated to indicating the terminal capability.

19. A random access apparatus, comprising:
a sending unit, configured to send a message A comprising a physical uplink shared channel, wherein the message A further comprises an early indication for indicating a terminal capability; and to re-report the terminal capability corresponding to the early indication in response to a transmission failure of the physical uplink shared channel in the message A.

20. A random access apparatus, comprising:
a receiving unit, configured to receive a message A comprising a physical uplink shared channel, wherein the message A further comprises an early indication for indicating a terminal capability; and to re-receive the terminal capability corresponding to the early indication in response to a transmission failure of the physical uplink shared channel in the message A.

21. A random access device, comprising:
a processor; and
a memory for storing instructions executable by the processor,
wherein the processor is configured to execute the random access method according to any one of claims 1 to 9.

22. A random access device, comprising:
a processor; and
a memory for storing instructions executable by the processor,
wherein the processor is configured to execute the random access method according to any one of claims 10 to 18.

23. A storage medium having instructions stored thereon that, when executed by a processor of a terminal, cause the terminal to execute the random access method according to any one of claims 1 to 9.

24. A storage medium having instructions stored thereon that, when executed by a processor of a network device, cause the network device to execute the random access method according to any one of claims 10 to 18.
